# EUROPEAN PATENT APPLICATION

(11) **EP 4 668 668 A1**
(43) Date of publication of application: **24.12.2025**
(21) Application number: 23921670.8
(22) Date of filing: 13.02.2023
(51) Int. Cl.: H04L 9/08, H04L 9/40, H04W 12/041, H04W 12/0431

(54) **METHOD AND APPARATUS FOR GENERATING PREMASTER SECRET OF DATAGRAM TRANSPORT LAYER SECURITY (DTLS)**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Stöckeler, Ferdinand
(86) International application number: PCT/CN2023/075772
(87) International publication number: WO 2024/168497

(57) **Abstract**

The present disclosure belongs to the technical field of communications, and provides a method and apparatus for generating a premaster secret of datagram transport layer security (DTLS), a device, and a storage medium. The method comprises: receiving a DTLS message sent by a terminal device, wherein the DTLS message comprises shared key PSK identities supported by the terminal device; selecting one PSK identity from the shared key PSK identities supported by the terminal device; obtaining a key according to the selected PSK identity; and generating a premaster secret of DTLS according to the obtained key. The present disclosure provides a processing method for "generation for a premaster secret of DTLS", and by generating a premaster secret corresponding to a selected PSK identity, DTLS can support security requirements of a Ua interface for a GBA and a Ua* interface for AKMA, and the security during communication can be improved.

## Description

### TECHNICAL FIELD

The present disclosure relates to, but is not limited to, the field of communication technology, and specifically to a method and apparatus for generating a datagram transport layer security (DTLS) pre-master secret, a device and a storage medium.

### BACKGROUND

In a communication system, an authentication and key management for applications (AKMA) specification based on 3rd generation partnership project (3GPP) credentials and a generic bootstrapping architecture (GBA) specification enable a user equipment (UE) and an application function (AF)/network application function (NAF) to share a common secret key after an application session establishment procedure.

### SUMMARY

With a method and apparatus for generating a datagram transport layer security (DTLS) pre-master secret, a device and a storage medium provided by the present disclosure, by generating a pre-master secret corresponding to a selected pre-shared key (PSK) identity, DTLS may support security requirements of a Ua interface for GBA and a Ua* interface for AKMA, thereby improving security during communication.

According to a first aspect of the embodiments of the present disclosure, a method for generating a DTLS pre-master secret is provided and performed by a first entity, including:
determining a PSK identity, in which the PSK identity is one of one or more PSK identities supported by the terminal, and the terminal is associated with the first entity;
obtaining a key according to the PSK identity; and
generating the DTLS pre-master secret according to the key.

According to a second aspect of the embodiments of the present disclosure, a method for generating a DTLS pre-master secret is provided and performed by a first entity, including:
receiving a DTLS message sent by a terminal, in which the DTLS message includes one or more PSK identities supported by the terminal;
selecting a PSK identity from the one or more PSK identities supported by the terminal;
obtaining a key according to the PSK identity; and
generating the DTLS pre-master secret according to the key.

According to a third aspect of the embodiments of the present disclosure, a method for generating a DTLS pre-master secret is provided and performed by a first entity, including:
receiving a DTLS message sent by a terminal, in which the DTLS message includes PSK-based cipher suites supported by the terminal;
sending a PSK hint to the terminal via the DTLS message in response to the first entity supporting the PSK-based cipher suites;
receiving a PSK identity sent by the terminal;
obtaining a key according to the PSK identity; and
generating the DTLS pre-master secret according to the key.

According to a fourth aspect of the embodiments of the present disclosure, a method for generating a DTLS pre-master secret is provided and performed by a terminal, including:
sending a DTLS message to a first entity, in which the DTLS message includes one or more PSK identities supported by the terminal.

According to a fifth aspect of the embodiments of the present disclosure, a method for generating a DTLS pre-master secret is provided and performed by a terminal, including:
sending a DTLS message to a first entity, in which the DTLS message includes PSK-based cipher suites supported by the terminal;
receiving a PSK hint sent by the first entity in response to the first entity supporting the PSK-based cipher suites; and
sending a PSK identity to the first entity.

According to a sixth aspect of the embodiments of the present disclosure, an apparatus for generating a DTLS pre-master secret is provided and applied in a first entity, including:
a transceiver module, configured to receive a DTLS message sent by a terminal, in which the DTLS message includes one or more PSK identities supported by the terminal;
a processing module, configured to select a PSK identity from the one or more PSK identities supported by the terminal;
the processing module being further configured to obtain a key according to the PSK identity; and
the processing module being further configured to generate the DTLS pre-master secret according to the key.

According to a seventh aspect of the embodiments of the present disclosure, an apparatus for generating a DTLS pre-master secret is provided and applied in a first entity, including:
a transceiver module, configured to receive a DTLS message sent by a terminal, in which the DTLS message includes PSK-based cipher suites supported by the terminal;
the transceiver module being further configured to send a PSK hint to the terminal via the DTLS message in response to the first entity supporting the PSK-based cipher suites;
the transceiver module being further configured to receive a PSK identity sent by the terminal;
a processing module, further configured to obtain a key according to the PSK identity; and
the processing module being further configured to generate the DTLS pre-master secret according to the key.

According to an eighth aspect of the embodiments of the present disclosure, an apparatus for generating a DTLS pre-master secret is provided and applied in a first entity, including:
a transceiver module, configured to send a DTLS message to a first entity, in which the DTLS message includes one or more PSK identities supported by the terminal.

According to a ninth aspect of the embodiments of the present disclosure, an apparatus for generating a DTLS pre-master secret is provided and applied in a first entity, including:
a transceiver module, configured to send a DTLS message to a first entity, in which the DTLS message includes PSK-based cipher suites supported by the terminal;
the transceiver module being further configured to receive a PSK hint sent by the first entity in response to the first entity supporting the PSK-based cipher suites; and
the transceiver module being further configured to send a PSK identity to the first entity.

According to a tenth aspect of the embodiments of the present disclosure, a first entity is provided, including: a processor and a memory. A computer program is stored in the memory, and the processor executes the computer program stored in the memory to cause an apparatus to perform the method according to the first aspect, the second aspect or the third aspect of the embodiments.

According to an eleventh aspect of the embodiments of the present disclosure, a terminal is provided, including: a processor and a memory. A computer program is stored in the memory, and the processor executes the computer program stored in the memory to cause an apparatus to perform the method according to the fourth aspect or the fifth aspect of the embodiments.

According to a twelfth aspect of the embodiments of the present disclosure, a system for generating a DTLS pre-master secret is provided, including:
a first entity, configured to perform the method according to the first aspect, the second aspect or the third aspect of the embodiments; and
a terminal, configured to perform the method according to the fourth aspect or the fifth aspect of the embodiments.

According to a thirteenth aspect of the embodiments of the present disclosure, a communication apparatus is provided, including: a processor and an interface circuit.

The interface circuit is configured to receive code instructions and transmit the code instructions to the processor.

The processor is configured to execute the code instructions to perform the method of any of the above aspects of the embodiments.

According to a fourteenth aspect of the embodiments of the present disclosure, a computer-readable storage medium for storing instructions is provided. When the instructions are executed, the method of any of the above aspects of the embodiments is implemented.

In conclusion, in the embodiments of the present disclosure, a DTLS message sent by a terminal is received, in which the DTLS message includes one or more PSK identities supported by the terminal, a PSK identity is selected from the one or more PSK identities supported by the terminal, a key is obtained according to the selected PSK identity, and the DTLS pre-master secret is generated according to the key. In the embodiments of the present disclosure, by generating a pre-master secret corresponding to a selected pre-shared key (PSK) identity, DTLS may support security requirements of a Ua interface for GBA and a Ua* interface for AKMA, thereby improving security during communication. The present disclosure provides a processing method for a situation of "generating a DTLS pre-master secret", which uses a DTLS message including a pre-master secret to authenticate the terminal and the first entity through a Ua interface for GBA and a Ua* interface for AKMA, so that messages carried by the Ua* interface and the Ua interface can be protected, and the security during communication can be improved.

### BRIEF DESCRIPTION OF THE DRAWINGS

The above described aspects and/or additional aspects and advantages of the present disclosure will become apparent and easily understood from the following description of the embodiments in conjunction with the accompanying drawings, in which:
FIG. 1 is a flowchart of a method for generating a datagram transport layer security (DTLS) pre-master secret according to an embodiment of the present disclosure;
FIG. 2 is a flowchart of a method for generating a DTLS pre-master secret according to an embodiment of the present disclosure;
FIG. 3 is a flowchart of a method for generating a DTLS pre-master secret according to an embodiment of the present disclosure;
FIG. 4 is a flowchart of a method for generating a DTLS pre-master secret according to an embodiment of the present disclosure;
FIG. 5 is a flowchart of a method for generating a DTLS pre-master secret according to an embodiment of the present disclosure;
FIG. 6 is a flowchart of a method for generating a DTLS pre-master secret according to an embodiment of the present disclosure;
FIG. 7 is a flowchart of a method for generating a DTLS pre-master secret according to an embodiment of the present disclosure;
FIG. 8 is a flowchart of a method for generating a DTLS pre-master secret according to an embodiment of the present disclosure;
FIG. 9 is a flowchart of a method for generating a DTLS pre-master secret according to an embodiment of the present disclosure;
FIG. 10 is a flowchart of a method for generating a DTLS pre-master secret according to an embodiment of the present disclosure;
FIG. 11 is a flowchart of a method for generating a DTLS pre-master secret according to an embodiment of the present disclosure;
FIG. 12 is a block diagram of an apparatus for generating a DTLS pre-master secret according to an embodiment of the present disclosure;
FIG. 13 is a block diagram of an apparatus for generating a DTLS pre-master secret according to an embodiment of the present disclosure;
FIG. 14 is a block diagram of an apparatus for generating a DTLS pre-master secret according to an embodiment of the present disclosure;
FIG. 15 is a block diagram of an apparatus for generating a DTLS pre-master secret according to an embodiment of the present disclosure;
FIG. 16 is a block diagram of a system for generating a DTLS pre-master secret according to an embodiment of the present disclosure;
FIG. 17 is a block diagram of a user equipment (UE) according to an embodiment of the present disclosure; and
FIG. 18 is a block diagram of a network device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first information may also be referred to as the second information, and likewise the second information may be referred to as the first information. Depending on the context, the words "if" and "in a case" used here may be interpreted as "when" or "in response to determining".

Network elements or network functions involved in the embodiments of the present disclosure may be implemented by independent hardware devices or by software in the hardware devices, which is not limited in the embodiments of the present disclosure.

In a communication system, an authentication and key management for applications (AKMA) specification based on 3rd generation partnership project (3GPP) credentials and a generic bootstrapping architecture (GBA) specification enable a user equipment (UE) and an application function (AF)/network application function (NAF) to share a common secret key after an application session establishment procedure.

In order to protect application layer interfaces Ua* (for AKMA) and Ua (for GBA) between the UE and the AF, various security protocols, such as the transport layer security (TLS), may be used.

One option for an IoT-friendly protocol is the Internet engineering task force (IETF) datagram transport layer security (DTLS) specified in the IETF request for comments (RFC) 7252 [4], which uses the IETF constrained application protocol (CoAP) as an underlying transport layer.

In the SEAL (Service Enabler Architecture Layer for Verticals) specification, the communication security of CoAP (Constrained Application Protocol) is based on DTLS or object security for constrained representational state transfer (RESTful) environments (OSCORE) of RESTful environment. The security of CoAP based on DTLS is specified in RFC 6347[6]. IETF DTLS is currently specified as an option for providing security for the open mobile alliance (OMA) lightweight machine-to-machine/man (M2M) standard. However, how to use DTLS to support the security of the Ua interface for GBA and the Ua* interface for AKMA has not yet been specified.

A method and apparatus for generating a datagram transport layer security (DTLS) pre-master secret, a device and a storage medium provided by the embodiments of the present disclosure will be described in detail below with reference to the accompanying drawings.

An embodiment of the present disclosure provides a method for generating a DTLS pre-master secret. The method is applied in a first entity and may include the following steps.
001, a pre-shared key (PSK) identity is determined, in which the PSK identity is one of one or more PSK identities supported by the terminal, and the terminal is associated with the first entity.
002, a key is obtained according to a selected PSK identity.
003, a DTLS pre-master secret is generated according to the key.

In an embodiment of the present disclosure, the first entity may receive a DTLS message sent by a terminal, in which the DTLS message includes one of one or more PSK identities supported by the terminal, and may select the PSK identity from the one or more PSK identities. The first entity may receive a message from the terminal, i.e., the first entity is associated with the terminal.

In an embodiment of the present disclosure, the first entity may refer to an AF entity or a network application function (NAF) entity. In this case, the first entity may receive a DTLS message sent by the terminal. Based on its own security capability, the first entity may also select a PSK identity received from the terminal. Secondly, the first entity may obtain a key according to the selected PSK identity and derive a DTLS pre-master secret by using the key as an input parameter.

Alternatively, in an embodiment of the present disclosure, the DTLS message may refer to a message sent based on DTLS.

In an embodiment of the present disclosure, the one or more PSK identities supported by the terminal may refer to one or more PSK identities supported by the terminal and related to different scenarios, for example, including a PSK identity related to AKMA, a PSK identity related to GBA, and the like.

In an embodiment of the present disclosure, the PSK identity includes a PSK hint (also called PSK identity hint), an AKMA key identifier (A-KID) and a bootstrapping transaction identifier (B-TID). For PSK identities in different scenarios, the included contents may be different. For example, the PSK identity related to AKMA may include a first PSK hint and/or the A-KID. Alternatively, the PSK identity related to GBA may include a second PSK hint and the B-TID.

Alternatively, in an embodiment of the present disclosure, the PSK hint may refer to hint information corresponding to the PSK identity. When the application scenario changes, the corresponding PSK hint may change.

Alternatively, in an embodiment of the present disclosure, the A-KID may be used to find a key associated with AKMA during identity authentication.

Alternatively, in an embodiment of the present disclosure, the B-TID may be used to find a key associated with GBA during identity authentication.

In an embodiment of the present disclosure, when obtaining the key according to the selected PSK identity, the first entity may obtain the key from the network based on the selected PSK identity.

In conclusion, in embodiments of the present disclosure, a PSK identity is determined, in which the PSK identity is one of one or more PSK identities supported by a terminal associated with a first entity, a key is obtained according to the selected PSK identity, and the DTLS pre-master secret is generated according to the key. In embodiments of the present disclosure, by generating a pre-master secret corresponding to the selected PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA uses a DTLS message including a pre-master secret to authenticate the terminal and the first entity, so that messages carried by the Ua* interface and the Ua interface can be protected, and the security during communication can be improved.

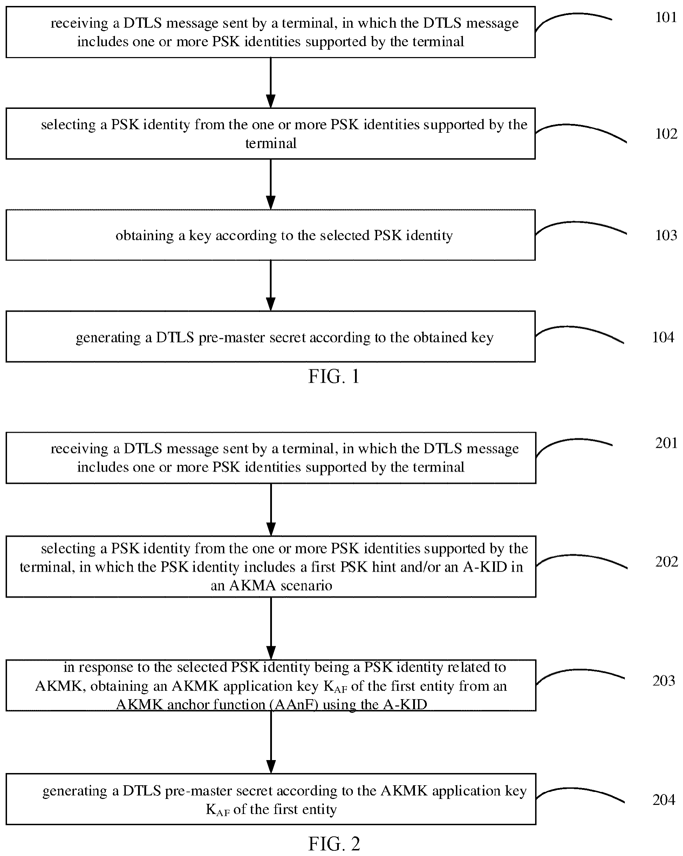

FIG. 1 is a flow chart of a method for generating a DTLS pre-master secret provided by an embodiment of the present disclosure. The method is applied to a first entity. As shown in FIG. 1, the method may include the following steps.

Step 101, a DTLS message sent by a terminal is received, in which the DTLS message includes one or more PSK identities supported by the terminal.

Step 102, a PSK identity is selected from the one or more PSK identities supported by the terminal.

Step 103, a key is obtained based on the selected PSK identity.

Step 104, a DTLS pre-master secret is generated according to the obtained key.

It should be noted that, in an embodiment of the present disclosure, the terminal may be a device that provides voice and/or data connectivity to users. The terminal may communicate with one or more core networks via a radio access network (RAN). The terminal may be an Internet of Things (IoT) terminal, such as a sensor device, a mobile phone (or a "cellular" phone), and a computer with an IoT UE. For example, the terminal may be a fixed, portable, pocket-sized, handheld, computer-built-in or vehicle-mounted device. For example, the terminal may be a station (STA), a subscriber unit, a subscriber station, a mobile station, a mobile, a remote station, an access point, a remote terminal, an access terminal, a user terminal, or a user agent. Alternatively, the terminal may also be a device of an unmanned aerial vehicle (UAV). Alternatively, the terminal may also be a vehicle-mounted device, for example, the terminal may be a driving computer with a wireless communication function, or a wireless terminal externally connected to the driving computer. Alternatively, the terminal may also be a roadside device, for example, a street lamp, a signal lamp or other roadside devices with a wireless communication function.

In an embodiment of the present disclosure, the first entity may refer to an AF entity or a NAF entity. In this case, the first entity may receive a DTLS message sent by the terminal. Based on its own security capability, the first entity may also select a PSK identity received from the terminal. Secondly, the first entity may obtain a key according to the selected PSK identity and derive a DTLS pre-master secret by using the key as an input parameter.

Alternatively, in an embodiment of the present disclosure, the DTLS message may refer to a message sent based on DTLS.

In an embodiment of the present disclosure, the one or more PSK identities supported by the terminal may refer to one or more PSK identities supported by the terminal and related to different scenarios, for example, including a PSK identity related to AKMA, a PSK identity related to GBA, and the like.

In an embodiment of the present disclosure, the PSK identity includes a PSK hint (also called PSK identity hint), an AKMA key identifier (A-KID) and a bootstrapping transaction identifier (B-TID). For PSK identities in different scenarios, the included contents may be different. For example, the PSK identity related to AKMA may include a first PSK hint and/or the A-KID. Alternatively, the PSK identity related to GBA may include a second PSK hint and the B-TID.

Alternatively, in an embodiment of the present disclosure, the PSK hint may refer to hint information corresponding to the PSK identity. When the application scenario changes, the corresponding PSK hint may change.

Alternatively, in an embodiment of the present disclosure, the A-KID may be used to find a key associated with AKMA during identity authentication.

Alternatively, in an embodiment of the present disclosure, the B-TID may be used to find a key associated with GBA during identity authentication.

In an embodiment of the present disclosure, when obtaining the key according to the selected PSK identity, the first entity may obtain the key from the network based on the selected PSK identity.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In conclusion, in embodiments of the present disclosure, a DTLS message sent by a terminal is received, in which the DTLS message includes one or more PSK identities supported by the terminal, a PSK identity is selected from the one or more PSK identities supported by the terminal, a key is obtained according to the selected PSK identity, and the DTLS pre-master secret is generated according to the key. In embodiments of the present disclosure, by generating a pre-master secret corresponding to the selected PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

FIG. 2 is a flow chart of a method for generating a DTLS pre-master secret provided by an embodiment of the present disclosure. The method is applied to a first entity. As shown in FIG. 2, the method may include the following steps.

Step 201, a DTLS message sent by a terminal is received, in which the DTLS message includes one or more PSK identities supported by the terminal.

Step 202, a PSK identity is selected from the one or more PSK identities supported by the terminal. The PSK identity includes a first PSK hint and/or an A-KID in an AKMA scenario.

Step 203, in response to the selected PSK identity being a PSK identity related to AKMK, an AKMK application key K_{AF} of the first entity is obtained from an AKMK anchor function (AAnF) using the A-KID.

Step 204, a DTLS pre-master secret is generated according to the AKMK application key K_{AF} of the first entity.

In an embodiment of the present disclosure, the first PSK hint includes 3GPP-AKMK.

In an embodiment of the present disclosure, the first entity may be an AF entity or a NAF entity.

In conclusion, in embodiments of the present disclosure, a DTLS message sent by a terminal is received, in which the DTLS message includes one or more PSK identities supported by the terminal, a PSK identity is selected from the one or more PSK identities supported by the terminal, in which the PSK identity includes a first PSK hint and/or an A-KID in an AKMK scenario, an AKMK application key K_{AF} of the first entity is obtained from an AAnF using the A-KID in response to the selected PSK identity being a PSK identity related to AKMK, and the DTLS pre-master secret is generated according to the AKMK application key K_{AF} of the first entity. In embodiments of the present disclosure, by generating a pre-master secret corresponding to the PSK identity related to AKMK, DTLS may support security requirements of a Ua* interface for AKMA, thereby improving security during communication. The present disclosure provides a processing method for a situation of "generating a DTLS pre-master secret", in which a Ua* interface for AKMA uses a DTLS message including a pre-master secret to authenticate the terminal and the first entity, so that messages carried by the Ua interface can be protected, and the security during communication can be improved.

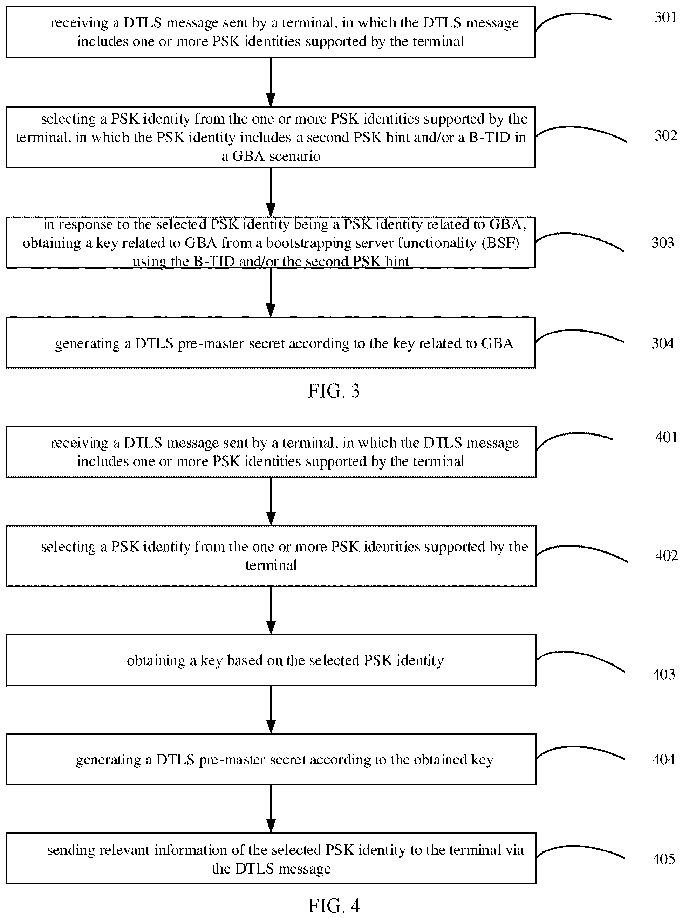

FIG. 3 is a flow chart of a method for generating a DTLS pre-master secret provided by an embodiment of the present disclosure. The method is applied to a first entity. As shown in FIG. 3, the method may include the following steps.

Step 301, a DTLS message sent by a terminal is received, in which the DTLS message includes one or more PSK identities supported by the terminal.

Step 302, a PSK identity is selected from the one or more PSK identities supported by the terminal. The PSK identity includes a second PSK hint and/or a B-TID in a GBA scenario.

Step 303, in response to the selected PSK identity being a PSK identity related to GBA, a key related to GBA is obtained from a bootstrapping server functionality (BSF) using the B-TID and/or the second PSK hint.

Step 304, a DTLS pre-master secret is generated according to the key related to GBA.

In an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

In an embodiment of the present disclosure, when the first entity is an AF entity, the AF may use the B-TID and/or the second PSK hint to obtain the key related to GBA from the BSF in response to the AF selecting the PSK identity related to GBA.

In an embodiment of the present disclosure, when the first entity is a NAF entity, the NAF may use the B-TID and/or the second PSK hint to obtain the key related to GBA from the BSF in response to the NAF selecting the PSK identity related to GBA.

In an embodiment of the present disclosure, when obtaining the key related to GBA from the BSF, the obtained key may be one of Ks_ext_NAF, Ks_int_NAF, and Ks_NAF.

In conclusion, in embodiments of the present disclosure, a DTLS message sent by a terminal is received, in which the DTLS message includes one or more PSK identities supported by the terminal, a PSK identity is selected from the one or more PSK identities supported by the terminal, in which the PSK identity includes a second PSK hint and/or a B-TID in a GBA scenario, a key related to GBA is obtained from a BSF using the B-TID and/or the second PSK hint in response to the selected PSK identity being a PSK identity related to GBA, and the DTLS pre-master secret is generated according to the key related to GBA. In these embodiments of the present disclosure, by generating a pre-master secret corresponding to the PSK identity related to GBA, DTLS may support security requirements of a Ua interface for GBA, thereby improving security during communication. The present disclosure provides a processing method for a situation of "generating a DTLS pre-master secret", in which a Ua interface for GBA uses a DTLS message including a pre-master secret to authenticate the terminal and the first entity, so that messages carried by the Ua interface can be protected, and the security during communication can be improved.

FIG. 4 is a flow chart of a method for generating a DTLS pre-master secret provided by an embodiment of the present disclosure. The method is applied to a first entity. As shown in FIG. 4, the method may include the following steps.

Step 401, a DTLS message sent by a terminal is received, in which the DTLS message includes one or more PSK identities supported by the terminal.

Step 402, a PSK identity is selected from the one or more PSK identities supported by the terminal.

Step 403, a key is obtained based on the selected PSK identity.

Step 404, a DTLS pre-master secret is generated according to the obtained key.

Step 405, relevant information of the selected PSK identity is sent to the terminal via the DTLS message.

In an embodiment of the present disclosure, regarding the introduction of steps 401 to 404, reference may be made to the description of the above embodiments, which is not limited here. The alternatives of the embodiments of the present disclosure may be combined arbitrarily, and the embodiment of the present disclosure may be combined with the steps of other embodiments and the alternatives of other embodiments without contradiction.

In an embodiment of the present disclosure, when the first entity is an AF entity, the AF may send the relevant information of the selected PSK identity to the terminal.

In an embodiment of the present disclosure, when the first entity is a NAF entity, the NAF may send the relevant information of the selected PSK identity to the terminal. In an embodiment of the present disclosure, the relevant information of the selected PSK identity, for example, may be an identifier of the selected PSK identity.

In conclusion, in embodiments of the present disclosure, a DTLS message sent by a terminal is received, in which the DTLS message includes one or more PSK identities supported by the terminal, a PSK identity is selected from the one or more PSK identities supported by the terminal, a key is obtained according to the selected PSK identity, the DTLS pre-master secret is generated according to the key, and relevant information of the selected PSK identity is sent to the terminal via the DTLS message. In these embodiments of the present disclosure, by generating a pre-master secret corresponding to the selected PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

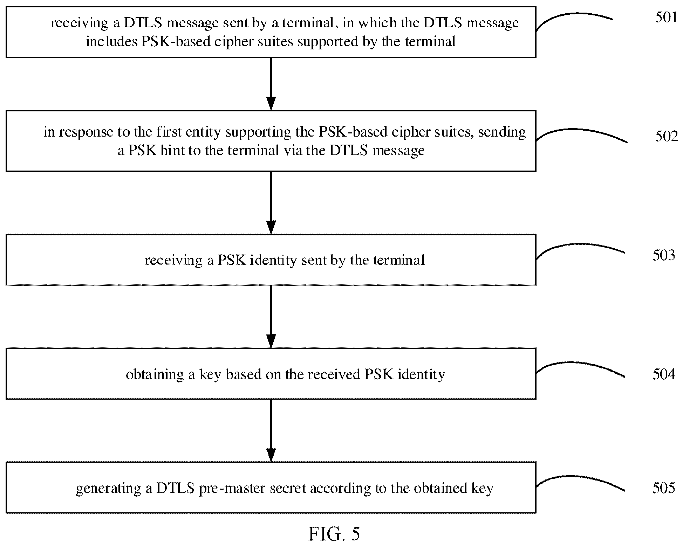

FIG. 5 is a flow chart of a method for generating a DTLS pre-master secret provided by an embodiment of the present disclosure. The method is applied to a first entity. As shown in FIG. 5, the method may include the following steps.

Step 501, a DTLS message sent by a terminal is received, in which the DTLS message includes PSK-based cipher suites supported by the terminal.

Step 502, in response to the first entity supporting the PSK-based cipher suites, a PSK hint is sent to the terminal via the DTLS message.

Step 503, a PSK identity sent by the terminal is received.

Step 504, a key is obtained based on the received PSK identity.

Step 505, a DTLS pre-master secret is generated according to the obtained key.

In an embodiment of the present disclosure, the first entity may refer to an AF entity. In this case, the AF may receive a DTLS message including all PSK-based cipher suites supported by the terminal from the terminal, and return a PSK hint supported by the AF to the terminal. Then, the AF may receive a PSK identity corresponding to the PSK hit from the terminal, obtain a key according to the received PSK identity. Finally, the AF may derive a DTLS pre-master secret by using the key as an input parameter.

In an embodiment of the present disclosure, the first entity may refer to a NAF entity. In this case, the NAF may receive a DTLS message including all PSK-based cipher suites supported by the terminal from the terminal, and return a PSK hint supported by the NAF to the terminal. Then, the NAF may receive a PSK identity corresponding to the PSK hit from the terminal, obtain a key according to the received PSK identity. Finally, the NAF may derive a DTLS pre-master secret by using the key as an input parameter.

In an embodiment of the present disclosure, the PSK identity sent by the terminal may be a combination of a PSK hint and an A-KID or a combination of a PSK hint and a B-TID. The PSK hint may be one of 3GPP-AKMA, 3GPP-bootstrapping-uicc, 3GPP-gba-uicc, 3GPP-bootstrapping, 3GPP-gba, 3GPP-bootstrapping-digest or 3GPP-gba-digest.

In an embodiment of the present disclosure, the PSK hint may include at least one of 3GPP-AKMA, 3GPP-bootstrapping-uicc, 3GPP-gba-uicc, 3GPP-bootstrapping, 3GPP-gba, 3GPP-bootstrapping-digest or 3GPP-gba-digest.

In an embodiment of the present disclosure, when obtaining the key according to the selected PSK identity, the first entity may obtain the key from the network based on the selected PSK identity.

In conclusion, in embodiments of the present disclosure, a DTLS message sent by a terminal is received, in which the DTLS message includes PSK-based cipher suites supported by the terminal, a PSK hit is sent to the terminal via the DTLS message in response to the first entity supporting the PSK-based cipher suites, a PSK identity sent by the terminal is received, a key is obtained according to the received PSK identity, and the DTLS pre-master secret is generated according to the key. In these embodiments of the present disclosure, by generating a pre-master secret corresponding to the PSK-based cipher suites, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

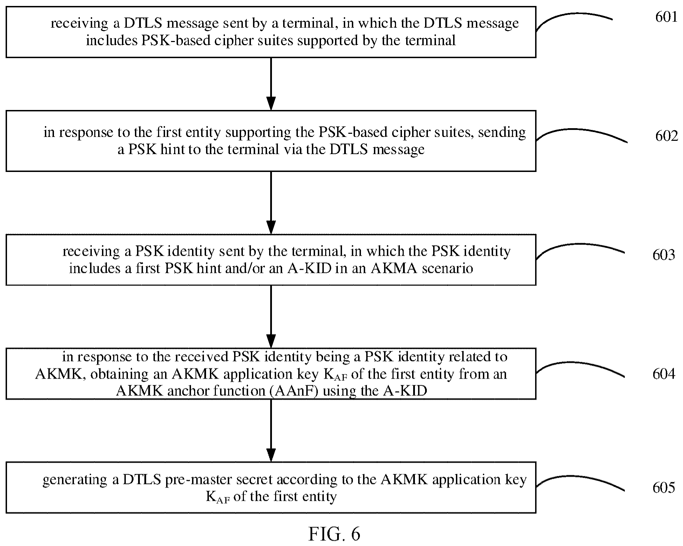

FIG. 6 is a flow chart of a method for generating a DTLS pre-master secret provided by an embodiment of the present disclosure. The method is applied to a first entity. As shown in FIG. 6, the method may include the following steps.

Step 601, a DTLS message sent by a terminal is received, in which the DTLS message includes PSK-based cipher suites supported by the terminal.

Step 602, in response to the first entity supporting the PSK-based cipher suites, a PSK hint is sent to the terminal via the DTLS message.

Step 603, a PSK identity sent by the terminal is received. The PSK identity includes a first PSK hint and/or an A-KID in an AKMA scenario.

Step 604, in response to the received PSK identity being a PSK identity related to AKMK, an AKMK application key K_{AF} of the first entity is obtained from an AKMK anchor function (AAnF) using the A-KID.

Step 605, a DTLS pre-master secret is generated according to the AKMK application key K_{AF} of the first entity.

In an embodiment of the present disclosure, the first entity may be an AF entity or a NAF entity.

In an embodiment of the present disclosure, the first PSK hint includes 3GPP-AKMK.

In conclusion, in embodiments of the present disclosure, a DTLS message sent by a terminal is received, in which the DTLS message includes PSK-based cipher suites supported by the terminal, a PSK hit is sent to the terminal via the DTLS message in response to the first entity supporting the PSK-based cipher suites, a PSK identity sent by the terminal is received, in which the PSK identity includes a first PSK hint and/or an A-KID in an AKMK scenario, an AKMK application key K_{AF} of the first entity is obtained from an AAnF using the A-KID in response to the received PSK identity being a PSK identity related to AKMK, and the DTLS pre-master secret is generated according to the AKMK application key K_{AF} of the first entity. In these embodiments of the present disclosure, by generating a pre-master secret corresponding to the PSK-based cipher suites and supporting AKMK, DTLS may support security requirements of a Ua* interface for AKMA, thereby improving security during communication. The present disclosure provides a processing method for a situation of "generating a DTLS pre-master secret", in which a Ua* interface for AKMA uses a DTLS message including a pre-master secret to authenticate the terminal and the first entity, so that messages carried by the Ua interface can be protected, and the security during communication can be improved.

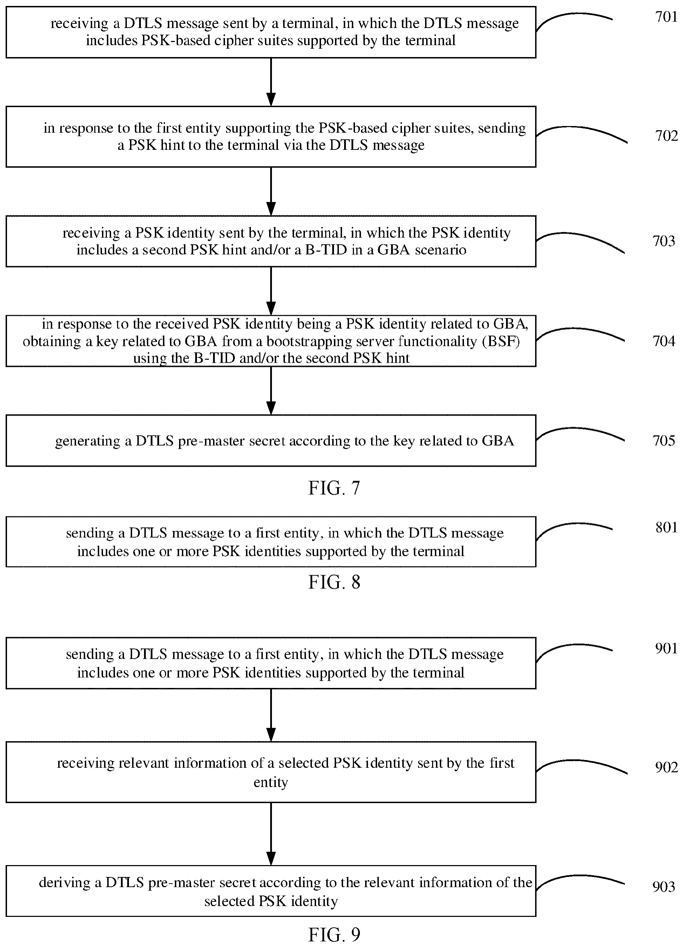

FIG. 7 is a flow chart of a method for generating a DTLS pre-master secret provided by an embodiment of the present disclosure. The method is applied to a first entity. As shown in FIG. 7, the method may include the following steps.

Step 701, a DTLS message sent by a terminal is received, in which the DTLS message includes PSK-based cipher suites supported by the terminal.

Step 702, in response to the first entity supporting the PSK-based cipher suites, a PSK hint is sent to the terminal via the DTLS message.

Step 703, a PSK identity sent by the terminal is received. The PSK identity includes a second PSK hint and/or a B-TID in a GBA scenario.

Step 704, in response to the received PSK identity being a PSK identity related to GBA, a key related to GBA is obtained from a bootstrapping server functionality (BSF) using the B-TID and/or the second PSK hint.

Step 705, a DTLS pre-master secret is generated according to the key related to GBA.

In an embodiment of the present disclosure, the first entity may be an AF entity or a NAF entity.

In an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

In an embodiment of the present disclosure, when obtaining the key related to GBA from the BSF, the obtained key may be one of Ks_ext_NAF, Ks_int_NAF, and Ks_NAF.

In conclusion, in embodiments of the present disclosure, a DTLS message sent by a terminal is received, in which the DTLS message includes PSK-based cipher suites supported by the terminal, a PSK hit is sent to the terminal via the DTLS message in response to the first entity supporting the PSK-based cipher suites, a PSK identity sent by the terminal is received, in which the PSK identity includes a second PSK hint and/or a B-TID in a GBA scenario, a key related to GBA is obtained from a BSF using the B-TID and/or the second PSK hint in response to the received PSK identity being a PSK identity related to GBA, and the DTLS pre-master secret is generated according to the key related to GBA. In these embodiments of the present disclosure, by generating a pre-master secret corresponding to the PSK-based cipher suites and supporting GBA, DTLS may support security requirements of a Ua interface for GBA, thereby improving security during communication. The present disclosure provides a processing method for a situation of "generating a DTLS pre-master secret", in which a Ua interface for GBA uses a DTLS message including a pre-master secret to authenticate the terminal and the first entity, so that messages carried by the Ua interface can be protected, and the security during communication can be improved.

FIG. 8 is a flow chart of a method for generating a DTLS pre-master secret provided by an embodiment of the present disclosure. The method is applied to a terminal. As shown in FIG. 8, the method may include the following steps.

Step 801, a DTLS message is sent to a first entity, in which the DTLS message includes one or more PSK identities supported by the terminal.

In an embodiment of the present disclosure, regarding the introduction of step 801, reference may be made to the description of the above embodiments, which is not limited here. The alternatives of the embodiments of the present disclosure can be combined arbitrarily, and the embodiment of the present disclosure can be combined with the steps of other embodiments and the alternatives of other embodiments without contradiction.

In an embodiment of the present disclosure, the PSK identity includes a PSK hint, an A-KID and a B-TID.

In an embodiment of the present disclosure, the PSK identity may include a first PSK hint and/or an A-KID in an AKMA scenario. The first PSK hint includes 3GPP-AKMA.

In an embodiment of the present disclosure, the PSK identity may include a second PSK hint and/or a B-TID in a GBA scenario. The second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

In conclusion, in embodiments of the present disclosure, a DTLS message is sent to a first entity, in which the DTLS message includes one or more PSK identities supported by the terminal. In these embodiments of the present disclosure, the first entity may generate a pre-master secret corresponding to a selected PSK identity according to the DTLS message sent by the terminal, so that DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

FIG. 9 is a flow chart of a method for generating a DTLS pre-master secret provided by an embodiment of the present disclosure. The method is applied to a terminal. As shown in FIG. 9, the method may include the following steps.

Step 901, a DTLS message is sent to a first entity, in which the DTLS message includes one or more PSK identities supported by the terminal.

Step 902, relevant information of a selected PSK identity sent by the first entity is received.

Step 903, a DTLS pre-master secret is derived according to the relevant information of the selected PSK identity.

In an embodiment of the present disclosure, based on the DTLS pre-master secret, the terminal may securely send a CoAP message to the first entity.

In an embodiment of the present disclosure, when the terminal generates the DTLS pre-master secret according to the relevant information of the selected PSK identity, the DTLS pre-master secret may be generated based on the PSK identity selected by the first entity in the same manner as the first entity generating the pre-master secret. That is, the terminal may derive the DTLS pre-master secret through the key associated with the PSK identity sent to the first entity.

In an embodiment of the present disclosure, the terminal may use the A-KID to derive an AKMA application key K_{AF} according to the PSK identity related to AKMA sent by the first entity, and then generate the DTLS pre-master secret according to the AKMA application key K_{AF} of the terminal. The terminal may use the B-TID and/or the second PSK hint to derive the key related to GBA according to the PSK identity related to GBA sent by the first entity, and then generate the DTLS pre-master secret according to the key related to GBA.

In an embodiment of the present disclosure, the key related to GBA derived by the terminal may be one of Ks_ext_NAF, Ks_int_NAF, and Ks_NAF.

In conclusion, in embodiments of the present disclosure, a DTLS message is sent to a first entity, in which the DTLS message includes one or more PSK identities supported by the terminal, relevant information of a selected PSK identity sent by the first entity is received, and a DTLS pre-master secret is derived according to the relevant information of the selected PSK identity. In these embodiments of the present disclosure, the terminal may generate a pre-master secret corresponding to the selected PSK identity, so that DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

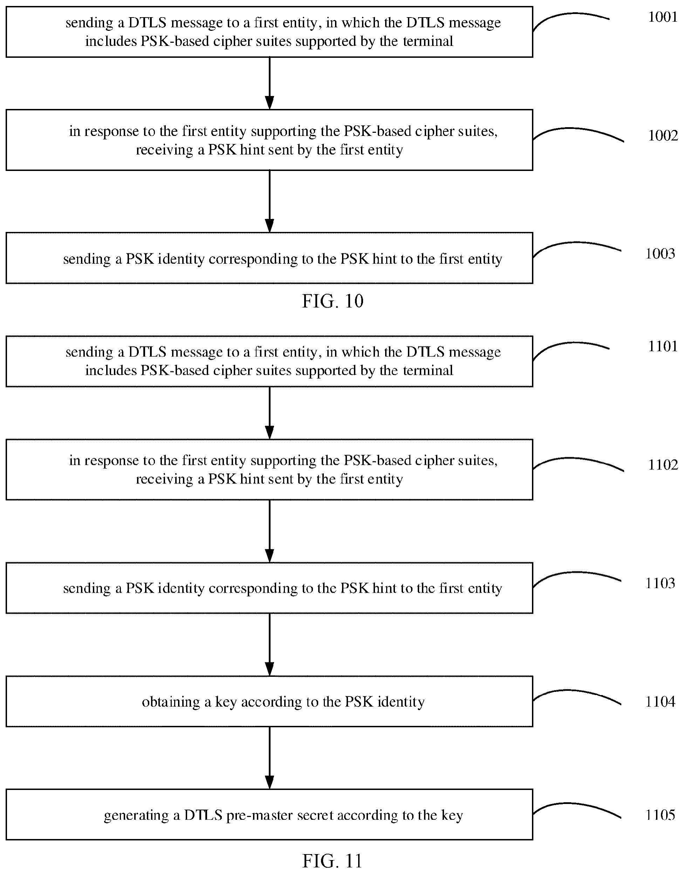

FIG. 10 is a flow chart of a method for generating a DTLS pre-master secret provided by an embodiment of the present disclosure. The method is applied to a terminal. As shown in FIG. 10, the method may include the following steps.

Step 1001, a DTLS message is sent to a first entity, in which the DTLS message includes PSK-based cipher suites supported by the terminal.

Step 1002, in response to the first entity supporting the PSK-based cipher suites, a PSK hint sent by the first entity is received.

Step 1003, a PSK identity corresponding to the PSK hint is sent to the first entity.

In an embodiment of the present disclosure, the PSK identity may be a combination of a PSK hint and an A-KID or a combination of a PSK hint and a B-TID. For example, the PSK identity may include a first PSK hint and/or an A-KID in an AKMA scenario. The PSK identity may include a second PSK hint and/or a B-TID in a GBA scenario.

In an embodiment of the present disclosure, the PSK hint may be one of 3GPP-AKMA, 3GPP-bootstrapping-uicc, 3GPP-gba-uicc, 3GPP-bootstrapping, 3GPP-gba, 3GPP-bootstrapping-digest or 3GPP-gba-digest.

In an embodiment of the present disclosure, the first PSK hint includes 3GPP-AKMA.

In an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

In conclusion, in embodiments of the present disclosure, a DTLS message is sent to a first entity, in which the DTLS message includes PSK-based cipher suites supported by the terminal, a PSK hint sent by the first entity is received in response to the first entity supporting the PSK-based cipher suites, and a PSK identity corresponding to the PSK hint is sent to the first entity. In these embodiments of the present disclosure, by sending the PSK identity corresponding to the PSK hint to the first entity, the first entity may generate a pre-master secret corresponding to the PSK-based cipher suites, so that DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

FIG. 11 is a flow chart of a method for generating a DTLS pre-master secret provided by an embodiment of the present disclosure. The method is applied to a terminal. As shown in FIG. 11, the method may include the following steps.

Step 1101, a DTLS message is sent to a first entity, in which the DTLS message includes PSK-based cipher suites supported by the terminal.

Step 1102, in response to the first entity supporting the PSK-based cipher suites, a PSK hint sent by the first entity is received.

Step 1103, a PSK identity corresponding to the PSK hint is sent to the first entity.

Step 1104, a key is obtained according to the PSK identity.

Step 1105, a DTLS pre-master secret is generated according to the key.

In an embodiment of the present disclosure, in response to the PSK identity being a PSK identity related to AKMA, an AKMA application key K_{AF} is derived using an A-KID. Then, the DTLS pre-master secret is derived according to the AKMA application key K_{AF}.

In an embodiment of the present disclosure, in response to the PSK identity being a PSK identity related to GBA, a key related to GBA is derived using a B-TID and/or a second PSK hint. Then, the DTLS pre-master secret is derived according to the key related to GBA.

In an embodiment of the present disclosure, the key related to GBA derived by the terminal may be one of Ks_ext_NAF, Ks_int_NAF, and Ks_NAF.

In conclusion, in embodiments of the present disclosure, a DTLS message is sent to a first entity, in which the DTLS message includes PSK-based cipher suites supported by the terminal, a PSK hint sent by the first entity is received in response to the first entity supporting the PSK-based cipher suites, and a PSK identity corresponding to the PSK hint is sent to the first entity, a key is obtained according to the PSK identity, and a DTLS pre-master secret is generated according to the key. In these embodiments of the present disclosure, by generating the pre-master secret corresponding to the PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

An embodiment of the present disclosure provides an apparatus for generating a DTLS pre-master secret. The apparatus is applied in a first entity and may include a processing module.

The processing module is configured to determine a pre-shared key (PSK) identity, in which the PSK identity is one of one or more PSK identities supported by the terminal, and the terminal is associated with the first entity.

The processing module is further configured to obtain a key according to a selected PSK identity.

The processing module is further configured to generate a DTLS pre-master secret according to the key.

In conclusion, in the apparatus for generating a DTLS pre-master secret of the embodiments of the present disclosure, a PSK identity is determined by the processing module, in which the PSK identity is one of one or more PSK identities supported by a terminal associated with a first entity, a key is obtained according to the selected PSK identity, and the DTLS pre-master secret is generated according to the key. In these embodiments of the present disclosure, by generating a pre-master secret corresponding to the selected PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA uses a DTLS message including a pre-master secret to authenticate the terminal and the first entity, so that messages carried by the Ua* interface and the Ua interface can be protected, and the security during communication can be improved.

Alternatively, in an embodiment of the present disclosure, the apparatus further includes:
a transceiver module, configured to receive a DTLS message sent by a terminal, in which the DTLS message includes one or more PSK identities supported by the terminal.

Alternatively, in an embodiment of the present disclosure, the PSK identity includes a first PSK hint and/or an A-KID in an AKMA scenario.

Alternatively, in an embodiment of the present disclosure, the first PSK hint includes 3GPP-AKMK.

Alternatively, in an embodiment of the present disclosure, the PSK identity includes a second PSK hint and/or a B-TID in a GBA scenario.

Alternatively, in an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

Alternatively, in an embodiment of the present disclosure, when the processing module is configured to obtain the key according to the selected PSK identity, the processing module is configured to:
in response to the selected PSK identity being a PSK identity related to AKMK, obtain an AKMK application key K_{AF} of the first entity from an AKMK anchor function (AAnF) using the A-KID.

Alternatively, in an embodiment of the present disclosure, when the processing module is configured to obtain the key according to the selected PSK identity, the processing module is configured to:
in response to the selected PSK identity being a PSK identity related to GBA, obtain a key related to GBA from a bootstrapping server functionality (BSF) using the B-TID and/or the second PSK hint.

Alternatively, in an embodiment of the present disclosure, when the processing module is configured to generate the DTLS pre-master secret according to the obtained key, the processing module is configured to:
generate a DTLS pre-master secret according to the AKMK application key K_{AF} of the first entity or the key related to GBA.

Alternatively, in an embodiment of the present disclosure, the transceiver module is further configured to:
send relevant information of the selected PSK identity to the terminal via the DTLS message.

Alternatively, in an embodiment of the present disclosure, the PSK identity includes a PSK hint, the A-KID and the B-TID.

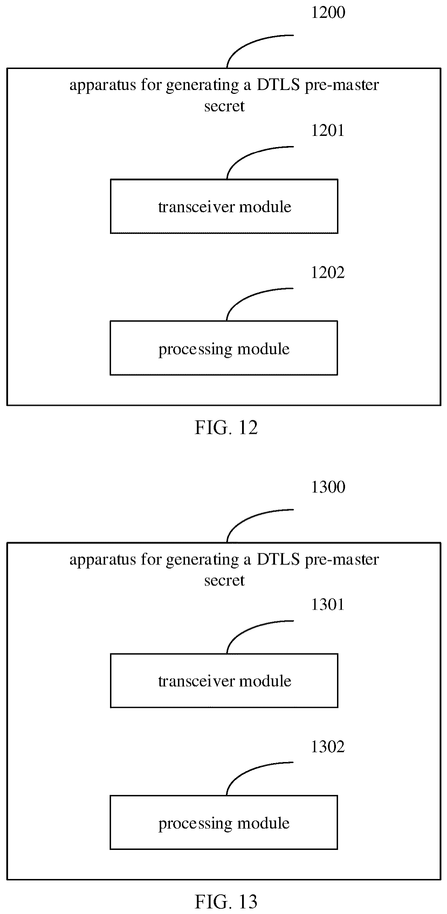

FIG. 12 is a block diagram of an apparatus for generating a DTLS pre-master secret according to an embodiment of the present disclosure. As shown in FIG. 12, the apparatus 1200 is applied in a first entity and may include a transceiver module 1201 and a processing module 1202.

The transceiver module 1201 is configured to receive a DTLS message sent by a terminal, in which the DTLS message includes one or more PSK identities supported by the terminal.

The processing module 120 is configured to select a PSK identity from the one or more PSK identities supported by the terminal.

The processing module 120 is further configured to obtain a key based on the selected PSK identity.

The processing module 120 is further configured to generate a DTLS pre-master secret according to the obtained key.

In conclusion, in the apparatus for generating a DTLS pre-master secret of the embodiments of the present disclosure, a DTLS message sent by a terminal is received by the transceiver module, in which the DTLS message includes one or more PSK identities supported by the terminal, a PSK identity is selected by the processing module from the one or more PSK identities supported by the terminal, a key is obtained according to the selected PSK identity, and the DTLS pre-master secret is generated according to the key. In these embodiments of the present disclosure, by generating a pre-master secret corresponding to the selected PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

Alternatively, in an embodiment of the present disclosure, the PSK identity includes a first PSK hint and/or an A-KID in an AKMA scenario.

Alternatively, in an embodiment of the present disclosure, the first PSK hint includes 3GPP-AKMK.

Alternatively, in an embodiment of the present disclosure, the PSK identity includes a second PSK hint and/or a B-TID in a GBA scenario.

Alternatively, in an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

Alternatively, in an embodiment of the present disclosure, when the processing module 1202 is configured to obtain the key according to the selected PSK identity, the processing module 1202 is configured to:
in response to the selected PSK identity being a PSK identity related to AKMK, obtain an AKMK application key K_{AF} of the first entity from an AKMK anchor function (AAnF) using the A-KID.

Alternatively, in an embodiment of the present disclosure, when the processing module 1202 is configured to obtain the key according to the selected PSK identity, the processing module 1202 is configured to:
in response to the selected PSK identity being a PSK identity related to GBA, obtain a key related to GBA from a bootstrapping server functionality (BSF) using the B-TID and/or the second PSK hint.

Alternatively, in an embodiment of the present disclosure, when the processing module 1202 is configured to generate the DTLS pre-master secret according to the obtained key, the processing module 1202 is configured to:
generate a DTLS pre-master secret according to the AKMK application key K_{AF} of the first entity or the key related to GBA.

Alternatively, in an embodiment of the present disclosure, the transceiver module 1201 is further configured to:
send relevant information of the selected PSK identity to the terminal via the DTLS message.

Alternatively, in an embodiment of the present disclosure, the PSK identity includes a PSK hint, the A-KID and the B-TID.

FIG. 13 is a block diagram of an apparatus for generating a DTLS pre-master secret according to an embodiment of the present disclosure. As shown in FIG. 13, the apparatus 1300 is applied in a first entity and may include a transceiver module 1301 and a processing module 1302.

The transceiver module 1301 is configured to receive a DTLS message sent by a terminal, in which the DTLS message includes PSK-based cipher suites supported by the terminal.

The transceiver module 1301 is further configured to, in response to the first entity supporting the PSK-based cipher suites, send a PSK hint to the terminal via the DTLS message.

The transceiver module 1301 is further configured to receive a PSK identity sent by the terminal.

The processing module 1302 is configured to obtain a key based on the received PSK identity.

The processing module 1302 is further configured to generate a DTLS pre-master secret according to the obtained key.

In conclusion, in the apparatus for generating a DTLS pre-master secret of the embodiments of the present disclosure, a DTLS message sent by a terminal is received by the transceiver module, in which the DTLS message includes PSK-based cipher suites supported by the terminal, a PSK hit is sent to the terminal via the DTLS message in response to the first entity supporting the PSK-based cipher suites, a PSK identity sent by the terminal is received, a key is obtained by the processing module according to the received PSK identity, and the DTLS pre-master secret is generated according to the key. In these embodiments of the present disclosure, by generating a pre-master secret corresponding to the PSK-based cipher suites, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

Alternatively, in an embodiment of the present disclosure, the PSK hint includes one of 3GPP-AKMA, 3GPP-bootstrapping-uicc, 3GPP-gba-uicc, 3GPP-bootstrapping, 3GPP-gba, 3GPP-bootstrapping-digest or 3GPP-gba-digest.

Alternatively, in an embodiment of the present disclosure, the PSK identity includes a first PSK hint and/or an A-KID in an AKMA scenario.

Alternatively, in an embodiment of the present disclosure, the first PSK hint includes 3GPP-AKMK.

Alternatively, in an embodiment of the present disclosure, the PSK identity includes a second PSK hint and/or a B-TID in a GBA scenario.

Alternatively, in an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

Alternatively, in an embodiment of the present disclosure, when the processing module 1302 is configured to obtain the key according to the received PSK identity, the processing module 1302 is configured to:
in response to the received PSK identity being a PSK identity related to AKMK, obtain an AKMK application key K_{AF} of the first entity from an AKMK anchor function (AAnF) using the A-KID.

Alternatively, in an embodiment of the present disclosure, when the processing module 1302 is configured to obtain the key according to the received PSK identity, the processing module 1302 is configured to:
in response to the received PSK identity being a PSK identity related to GBA, obtain a key related to GBA from a bootstrapping server functionality (BSF) using the B-TID and/or the second PSK hint.

Alternatively, in an embodiment of the present disclosure, when the processing module 1302 is configured to generate the DTLS pre-master secret according to the obtained key, the processing module 1302 is configured to:
generate a DTLS pre-master secret according to the AKMK application key K_{AF} of the first entity or the key related to GBA.

Alternatively, in an embodiment of the present disclosure, the PSK identity includes a PSK hint, the A-KID and the B-TID.

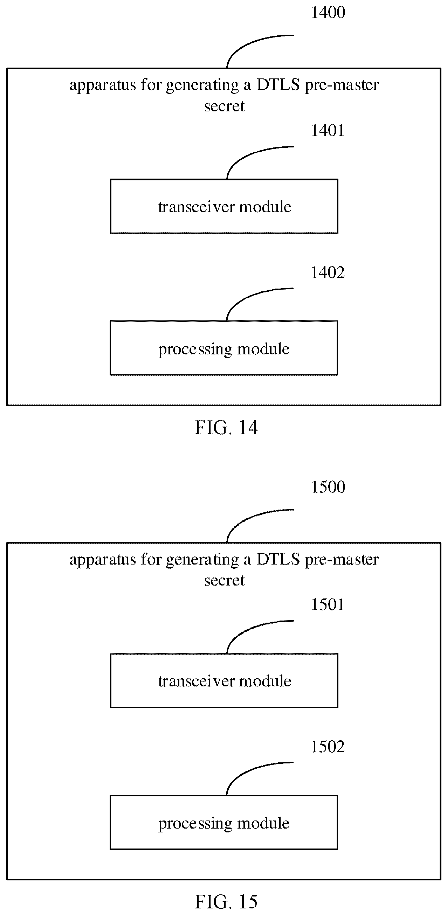

FIG. 14 is a block diagram of an apparatus for generating a DTLS pre-master secret according to an embodiment of the present disclosure. As shown in FIG. 14, the apparatus 1400 is applied in a terminal and may include a transceiver module 1401.

The transceiver module 1401 is configured to send a DTLS message to a first entity, in which the DTLS message includes one or more PSK identities supported by the terminal.

In conclusion, in the apparatus for generating a DTLS pre-master secret of the embodiments of the present disclosure, a DTLS message is sent by the transceiver module to a first entity, in which the DTLS message includes one or more PSK identities supported by the terminal. In these embodiments of the present disclosure, the first entity may generate a pre-master secret corresponding to a selected PSK identity according to the DTLS message sent by the terminal, so that DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

Alternatively, in an embodiment of the present disclosure, the PSK identity includes a PSK hint, an A-KID and a B-TID.

Alternatively, in an embodiment of the present disclosure, the PSK identity includes a first PSK hint and/or an A-KID in an AKMA scenario.

Alternatively, in an embodiment of the present disclosure, the first PSK hint includes 3GPP-AKMK.

Alternatively, in an embodiment of the present disclosure, the PSK identity includes a second PSK hint and/or a B-TID in a GBA scenario.

Alternatively, in an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

Alternatively, in an embodiment of the present disclosure, the apparatus further includes:
the transceiver module 1401, configured to receive relevant information of a selected PSK identity sent by the first entity;
a processing module 1402, configured to derive DTLS pre-master secret according to the relevant information of the selected PSK identity.

FIG. 15 is a block diagram of an apparatus for generating a DTLS pre-master secret according to an embodiment of the present disclosure. As shown in FIG. 15, the apparatus 1500 is applied in a terminal and may include a transceiver module 1501.

The transceiver module 1501 is configured to send a DTLS message to a first entity, in which the DTLS message includes PSK-based cipher suites supported by the terminal.

The transceiver module 1501 is further configured to, in response to the first entity supporting the PSK-based cipher suites, receive a PSK hint sent by the first entity.

The transceiver module 1501 is further configured to send a PSK identity to the first entity.

In conclusion, in the apparatus for generating a DTLS pre-master secret of the embodiments of the present disclosure, a DTLS message is sent by the transceiver module to a first entity, in which the DTLS message includes PSK-based cipher suites supported by the terminal, a PSK hint sent by the first entity is received in response to the first entity supporting the PSK-based cipher suites, and a PSK identity corresponding to the PSK hint is sent to the first entity. In these embodiments of the present disclosure, by sending the PSK identity corresponding to the PSK hint to the first entity, the first entity may generate a pre-master secret corresponding to the PSK-based cipher suites, so that DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

Alternatively, in an embodiment of the present disclosure, the apparatus further includes a processing module 1502, configured to:
obtain a key according to the PSK identity; and
generate a DTLS pre-master secret according to the key.

Alternatively, in an embodiment of the present disclosure, the PSK identity includes a first PSK hint and/or an A-KID in an AKMA scenario.

Alternatively, in an embodiment of the present disclosure, the first PSK hint includes 3GPP-AKMK.

Alternatively, in an embodiment of the present disclosure, the PSK identity includes a second PSK hint and/or a B-TID in a GBA scenario.

Alternatively, in an embodiment of the present disclosure, the second PSK hint includes one of 3GPP-bootstrapping-uicc, 3GPP-gba-uicc, 3GPP-bootstrapping, 3GPP-gba, 3GPP-bootstrapping-digest or 3GPP-gba-digest.

Alternatively, in an embodiment of the present disclosure, when the processing module 1502 is configured to obtain the key according to the PSK identity, the processing module 1502 is configured to:
in response to the PSK identity being a PSK identity related to AKMK, derive an AKMK application key K_{AF} using the A-KID.

Alternatively, in an embodiment of the present disclosure, when the processing module 1502 is configured to obtain the key according to the PSK identity, the processing module 1502 is configured to:
in response to the PSK identity being a PSK identity related to GBA, derive a key related to GBA using the B-TID and/or the second PSK hint.

Alternatively, in an embodiment of the present disclosure, when the processing module 1502 is configured to generate the DTLS pre-master secret according to the key, the processing module 1502 is configured to:
generate a DTLS pre-master secret according to the AKMK application key K_{AF} of the first entity or the key related to GBA.

Alternatively, in an embodiment of the present disclosure, the PSK identity includes a PSK hint, the A-KID and the B-TID.

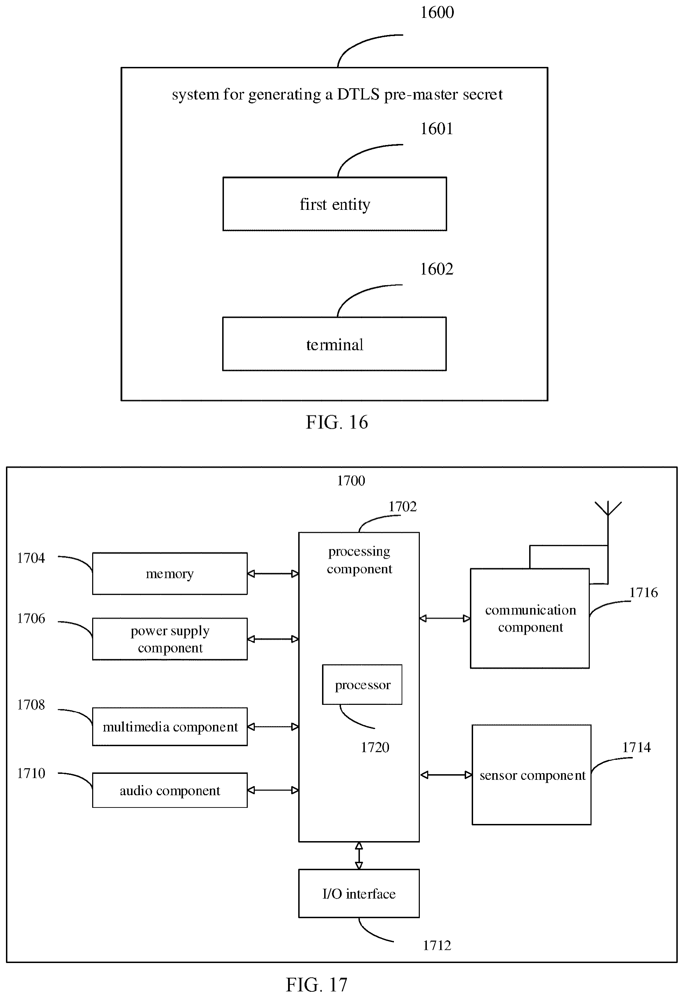

FIG. 16 is a block diagram of a system for generating a DTLS pre-master secret according to an embodiment of the present disclosure. As shown in FIG. 16, the system 1600 may include:
a first entity 1601, configured to perform any method shown in FIGS. 1-7;
a terminal 1602, configured to perform any method shown in FIGS. 8-11.

In conclusion, in the system for generating a DTLS pre-master secret of the embodiments of the present disclosure, by generating the pre-master secret corresponding to the PSK identity, DTLS may support security requirements of a Ua interface for GBA and a Ua* interface for AKMA, thereby improving security during communication. The present disclosure provides a processing method for a situation of "generating a DTLS pre-master secret", in which a Ua interface for GBA and a Ua* interface for AKMA use a DTLS message including a pre-master secret to authenticate the terminal and the first entity, so that messages carried by the Ua* interface and the Ua interface can be protected, and the security during communication can be improved.

FIG. 17 is a schematic block diagram of a UE 1700 according to an embodiment of the present disclosure. For example, the UE 1700 may be a mobile phone, a computer, a digital broadcasting terminal, a message transceiver device, a gaming console, a tablet device, a medical device, a fitness device, a personal digital assistant, etc.

Referring to FIG. 17, the UE 1700 may include one or more of the following components: a processing component 1702, a memory 1704, a power supply component 1706, a multimedia component 1708, an audio component 1710, an input/output (I/O) interface 1712, a sensor component 1714, and a communication component 1716.

The processing component 1702 generally controls the overall operations of the UE 1700, such as operations associated with displays, telephone calls, data communications, camera operations, and recording operations. The processing component 1702 may include one or more processors 1720 to execute instructions to accomplish all or some of the steps of the method described above. Alternatively, the processing component 1702 may include one or more modules to facilitate interactions between the processing component 1702 and other components. For example, the processing component 1702 may include a multimedia module to facilitate interactions between the multimedia component 1708 and the processing component 1702.

The memory 1704 is configured to store various types of data to support operation at the UE 1700. Examples of such data include instructions for any application or method operated on the UE 1700, contact data, phone book data, messages, pictures, videos, etc. The memory 1704 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 1706 provides power to the various components of the UE 1700. The power supply component 1706 may include a power management system, one or more power supplies, and other components associated with generating, managing, and distributing power for the UE 1700.

The multimedia component 1708 includes a screen providing an output interface between the UE 1700 and a user. In some embodiments, the screen may include a liquid crystal display (LCD) and a touch panel (TP). In the case that the screen includes a touch panel, the screen may be implemented as a touch screen to receive input signals from the user. If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1708 includes a front camera and/or a rear camera. When the UE 1700 is in an operating mode, such as a shooting mode or a video mode, the front camera and/or the rear camera may receive external multimedia data. Each front camera and rear camera may be a fixed optical lens system or have a focal length and optical zoom capability.

The audio component 1710 is configured to output and/or input audio signals. For example, the audio component 1710 includes a microphone (MIC) that is configured to receive external audio signals when the UE 1700 is in an operating mode, such as a call mode, a recording mode, and a voice recognition mode. The received audio signals may be further stored in the memory 1704 or sent in the communication component 1716. In some embodiments, the audio component 1710 further includes a speaker for outputting audio signals.

The I/O interface 1712 provides an interface between the processing component 1702 and a peripheral interface module, said peripheral interface module may be a keypad, a click wheel, buttons, etc. These buttons may include, but are not limited to: a home button, a volume button, a start button, and a lock button.

The sensor component 1714 includes one or more sensors for providing various aspects of status assessment for the UE 1700. For example, the sensor component 1714 can detect the open/closed state of the UE 1700, the relative positioning of components, such as the display and keypad of the UE 1700, and the sensor component 1714 can also detect the position change of the UE 1700 or a component of the UE 1700, the presence or absence of contact between the user and the UE 1700, the orientation or acceleration/deceleration of the UE 1700, and the temperature change of the UE 1700. The sensor component 1714 may include a proximity sensor configured to detect the presence of nearby objects without any physical contact. The sensor component 1714 may also include an optical sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 1716 is configured to facilitate communication between the UE 1700 and other devices by wired or wireless means. The UE 1700 may access a wireless network based on a communication standard, such as Wi-Fi, 2G or 3G, or their combination. In an exemplary embodiment, the communication component 1716 receives broadcast signals or broadcast-related information from an external broadcast management system in a broadcast channel. In an exemplary embodiment, the communication component 1716 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 1700 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

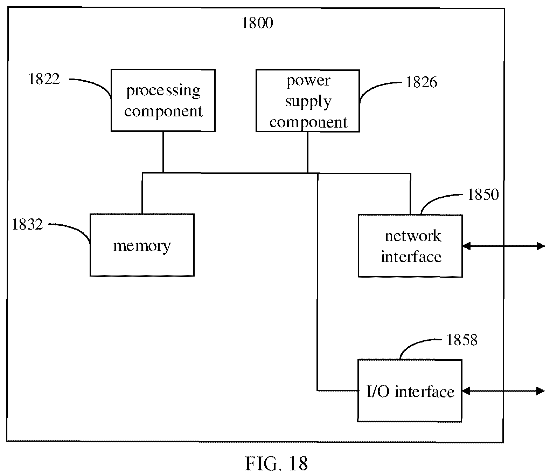

As shown in FIG. 18, an embodiment of the present disclosure shows a structure of a network device 1800. The network device 1800 may be provided as a network side device. Referring to FIG. 18, the network device 1800 includes a processing component 1822, which further includes one or more processors, and a memory resource represented by a memory 1832 for storing instructions executable by the processing component 1822, such as an application. The application stored in the memory 1832 may include one or more modules, each corresponding to a set of instructions. In addition, the processing component 1822 is configured to execute instructions to execute any method of the aforementioned method applied to the network device, for example, the method shown in FIG. 1. The network device 1800 may be for example the first entity.

The network device 1800 may also include a power supply component 1826 configured to perform power management of the network device 1800, a wired or wireless network interface 1850 configured to connect the network device 1800 to a network, and an input/output (I/O) interface 1858. The network device 1800 may operate based on an operating system stored in the memory 1832, such as Windows Server ^{™}, Mac OS X ^{™}, Unix ^{™}, Linux ^{™}, Free BSD ^{™} or the like.

In the embodiments provided by the present disclosure, the methods provided by the embodiments of the present disclosure are introduced from the perspectives of the network device and the UE. In order to implement the functions in the methods provided by the embodiments of the present disclosure, the network device and the UE may include a hardware structure and a software module, and the functions are implemented in the form of the hardware structure, the software module, or the hardware structure plus the software module. A function of the functions may be executed in the form of the hardware structure, the software module, or the hardware structure plus the software module.

In the embodiments provided by the present disclosure, the methods provided by the embodiments of the present disclosure are introduced from the perspectives of the network device and the UE. In order to implement the functions in the methods provided by the embodiments of the present disclosure, the network device and the UE may include a hardware structure and a software module, and the functions are implemented in the form of the hardware structure, the software module, or the hardware structure plus the software module. A function of the functions may be executed in the form of the hardware structure, the software module, or the hardware structure plus the software module.

An embodiment of the present disclosure provides a communication apparatus. The communication apparatus may include a transceiver module and a processing module. The transceiver module may include a sending module and/or a receiving module, in which the sending module is used to implement a sending function, the receiving module is used to implement a receiving function, and the transceiver module may implement the sending function and/or the receiving function.

The communication apparatus may be a terminal (such as the sending terminal in the above method embodiments), an apparatus in the terminal, or an apparatus capable of being used in combination with the terminal. Or, the communication apparatus may be a network device, an apparatus in the network device, or an apparatus capable of being used in combination with the network device.

An embodiment of the present disclosure provides another communication apparatus. The communication apparatus may be a network device, a terminal (such as the sending terminal in the above method embodiments), a chip, a chip system, a processor, etc. that supports the network device to implement the method, or a chip, a chip system, a processor, etc. that supports the terminal to implement the method. The apparatus may be used to implement the method in the above method embodiments. For details, please refer to the above method embodiments.

The communication apparatus may include one or more processors. The processor may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus may also include one or more memories for storing the computer program. The processor executes the computer program, to cause the communication apparatus to implement the method in the above method embodiments. Optionally, the memory may also store data. The communication apparatus 160 and the memory may be set up separately or integrated together.

Optionally, the communication apparatus may also include a transceiver and an antenna. The transceiver may be called a transceiver unit, a transceiver machine, or a transceiver circuit, etc., to implement the receiving and sending function. The transceiver may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus may also include one or more interface circuits. The interface circuit is used to receive code instructions and transmit the code instructions to the processor. The processor runs the code instructions to cause the communication apparatus to implement the method in the above method embodiments.

The communication apparatus is the first entity, the processor is configured to perform any method shown in FIGS. 1-7.

The communication apparatus is a terminal, the processor is configured to perform any method shown in FIGS. 8-11.

In an implementation, the processor may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the processor may store a computer program. When the computer program is running on the processor, the communication apparatus is caused to implement the method in the above method embodiments. The computer program may be solidified in the processor, in which case the processor may be implemented in hardware.

In an implementation, the communication apparatus includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal (such as the terminal in the aforementioned method embodiments), but the scope of the communication apparatus in the disclosure is not limited to this, and the structure of the communication apparatus may not be restricted. The communication apparatus may be an independent device or part of a larger device. For example, the communication apparatus may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, the chip includes a processor and an interface. There may be one or more processors, and there may be one or more interfaces.

Optionally, the chip also includes a memory, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A method for generating a datagram transport layer security (DTLS) pre-master secret, performed by a first entity, comprising:
receiving a DTLS message sent by a terminal, wherein the DTLS message comprises one or more pre-shared key (PSK) identities supported by the terminal;
selecting a PSK identity from the one or more PSK identities supported by the terminal;
obtaining a key according to the PSK identity; and
generating the DTLS pre-master secret according to the key.

2. The method of claim 1, wherein the PSK identity comprises a first PSK hint and/or an authentication and key management for applications (AKMA) key identifier (A-KID) in an AKMA scenario.

3. The method of claim 2, wherein the first PSK hint comprises 3rd generation partnership project-AKMA (3GPP-AKMA).

4. The method of claim 1, wherein the PSK identity comprises a second PSK hint and/or a bootstrapping transaction identifier (B-TID) in a generic bootstrapping architecture (GBA) scenario.

5. The method of claim 4, wherein the second PSK hint comprises one of 3GPP-bootstrapping-uicc, 3GPP-gba-uicc, 3GPP-bootstrapping, 3GPP-gba, 3GPP-bootstrapping-digest or 3GPP-gba-digest.

6. The method of claim 2, wherein obtaining the key according to the PSK identity comprises:
obtaining an AKMA application key K_{AF} of the first entity from an AKMA anchor function (AAnF) using the A-KID, in response to the PSK identity being a PSK identity related to AKMA.

7. The method of claim 4, wherein obtaining the key according to the PSK identity comprises:
obtaining a key related to GBA from a bootstrapping server function (BSF) using the B-TID and/or the second PSK hint, in response to the PSK identity being a PSK identity related to GBA.

8. The method of claim 6 or 7, wherein generating the DTLS pre-master secret according to the key comprises:
generating the DTLS pre-master secret according to the AKMA application key K_{AF} of the first entity or the key related to GBA.

9. The method of any of claims 1-8, further comprising:
sending relevant information of the PSK identity to the terminal via the DTLS message.

10. The method of claim 1, wherein the PSK identity comprises a PSK hint, an A-KID, and a B-TID.

11. A method for generating a datagram transport layer security (DTLS) pre-master secret, performed by a first entity, comprising:
receiving a DTLS message sent by a terminal, wherein the DTLS message comprises pre-shared key (PSK)-based cipher suites supported by the terminal;
sending a PSK hint to the terminal via the DTLS message in response to the first entity supporting the PSK-based cipher suites;
receiving a PSK identity sent by the terminal;
obtaining a key according to the PSK identity; and
generating the DTLS pre-master secret according to the key.

12. The method of claim 11, wherein the PSK hint comprises one of 3rd generation partnership project-authentication and key management for applications (3GPP-AKMA), 3GPP-bootstrapping-uicc, 3GPP-gba-uicc, 3GPP-bootstrapping, 3GPP-gba, 3GPP-bootstrapping-digest or 3GPP-gba-digest.

13. The method of claim 11, wherein the PSK identity comprises a first PSK hint and/or an AKMA key identifier (A-KID) in an AKMA scenario.

14. The method of claim 13, wherein the first PSK hint comprises 3GPP-AKMA.

15. The method of claim 11, wherein the PSK identity comprises a second PSK hint and/or a bootstrapping transaction identifier (B-TID) in a generic bootstrapping architecture (GBA) scenario.

16. The method of claim 15, wherein the second PSK hint comprises one of 3GPP-bootstrapping-uicc, 3GPP-gba-uicc, 3GPP-bootstrapping, 3GPP-gba, 3GPP-bootstrapping-digest or 3GPP-gba-digest.

17. The method of claim 13, wherein obtaining the key according to the PSK identity comprises:
obtaining an AKMA application key K_{AF} of the first entity from an AKMA anchor function (AAnF) using the A-KID, in response to the PSK identity being a PSK identity related to AKMA.

18. The method of claim 15, wherein obtaining the key according to the PSK identity comprises:
obtaining a key related to GBA from a bootstrapping server function (BSF) using the B-TID and/or the second PSK hint, in response to the PSK identity being a PSK identity related to GBA.

19. The method of claim 17 or 18, wherein generating the DTLS pre-master secret according to the key comprises:
generating the DTLS pre-master secret according to the AKMA application key K_{AF} of the first entity or the key related to GBA.

20. The method of claim 11, wherein the PSK identity comprises the PSK hint, an A-KID, and a B-TID.

21. A method for generating a datagram transport layer security (DTLS) pre-master secret, performed by a terminal, comprising:
sending a DTLS message to a first entity, wherein the DTLS message comprises one or more pre-shared key (PSK) identities supported by the terminal.

22. The method of claim 21, wherein the PSK identity comprises a PSK hint, an authentication and key management for applications (AKMA) key identifier (A-KID), and a bootstrapping transaction identifier (B-TID).

23. The method of claim 21, wherein the PSK identity comprises a first PSK hint and/or an A-KID in an AKMA scenario.

24. The method of claim 23, wherein the first PSK hint comprises 3rd generation partnership project-AKMA (3GPP-AKMA).

25. The method of claim 21, wherein the PSK identity comprises a second PSK hint and/or a B-TID in a generic bootstrapping architecture (GBA) scenario.

26. The method of claim 25, wherein the second PSK hint comprises one of 3GPP-bootstrapping-uicc, 3GPP-gba-uicc, 3GPP-bootstrapping, 3GPP-gba, 3GPP-bootstrapping-digest or 3GPP-gba-digest.

27. The method of claim 21, further comprising:
receiving relevant information of a selected PSK identity sent by the first entity; and
deriving the DTLS pre-master secret according to the relevant information of the selected PSK identity.

28. A method for generating a datagram transport layer security (DTLS) pre-master secret, performed by a terminal, comprising:
sending a DTLS message to a first entity, wherein the DTLS message comprises pre-shared key (PSK)-based cipher suites supported by the terminal;
receiving a PSK hint sent by the first entity in response to the first entity supporting the PSK-based cipher suites; and
sending a PSK identity to the first entity.

29. The method of claim 28, further comprising:
obtaining a key according to the PSK identity; and
generating the DTLS pre-master secret according to the key.

30. The method of claim 29, wherein the PSK identity comprises a first PSK hint and/or an authentication and key management for applications (AKMA) key identifier (A-KID) in an AKMA scenario.

31. The method of claim 30, wherein the first PSK hint comprises 3rd generation partnership project-AKMA (3GPP-AKMA).

32. The method of claim 29, wherein the PSK identity comprises a second PSK hint and/or a bootstrapping transaction identifier (B-TID) in a generic bootstrapping architecture (GBA) scenario.

33. The method of claim 32, wherein the second PSK hint comprises one of 3GPP-bootstrapping-uicc, 3GPP-gba-uicc, 3GPP-bootstrapping, 3GPP-gba, 3GPP-bootstrapping-digest or 3GPP-gba-digest.

34. The method of claim 30, wherein obtaining the key according to the PSK identity comprises:
deriving an AKMA application key K_{AF} using the A-KID, in response to the PSK identity being a PSK identity related to AKMA.

35. The method of claim 32, wherein obtaining the key according to the PSK identity comprises:
deriving a key related to GBA using the B-TID and/or the second PSK hint, in response to the PSK identity being a PSK identity related to GBA.

36. The method of claim 34 or 35, wherein generating the DTLS pre-master secret according to the key comprises:
generating the DTLS pre-master secret according to the AKMA application key K_{AF} of the first entity or the key related to GBA.

37. The method of claim 28, wherein the PSK identity comprises the PSK hint, an A-KID, and a B-TID.

38. An apparatus for generating a datagram transport layer security (DTLS) pre-master secret, applied in a first entity, comprising:
a transceiver module, configured to receive a DTLS message sent by a terminal, wherein the DTLS message comprises one or more pre-shared key (PSK) identities supported by the terminal; and
a processing module, configured to select a PSK identity from the one or more PSK identities supported by the terminal;
wherein the processing module is further configured to:
obtain a key according to the PSK identity; and
generate the DTLS pre-master secret according to the key.

39. An apparatus for generating a datagram transport layer security (DTLS) pre-master secret, applied in a first entity, comprising:
a transceiver module, configured to:
receive a DTLS message sent by a terminal, wherein the DTLS message comprises pre-shared key (PSK)-based cipher suites supported by the terminal,
send a PSK hint to the terminal via the DTLS message in response to the first entity supporting the PSK-based cipher suites, and
receive a PSK identity sent by the terminal;
a processing module, configured to
obtain a key according to the PSK identity; and
generate the DTLS pre-master secret according to the key.

40. An apparatus for generating a datagram transport layer security (DTLS) pre-master secret, applied in a terminal, comprising:
a transceiver module, configured to send a DTLS message to a first entity, wherein the DTLS message comprises one or more pre-shared key (PSK) identities supported by the terminal.

41. An apparatus for generating a datagram transport layer security (DTLS) pre-master secret, applied in a terminal, comprising:
a transceiver module, configured to:
send a DTLS message to a first entity, wherein the DTLS message comprises pre-shared key (PSK)-based cipher suites supported by the terminal;
receive a PSK hint sent by the first entity in response to the first entity supporting the PSK-based cipher suites;
send a PSK identity to the first entity.

42. A first entity, comprising a processor and a memory, wherein a computer program is stored in the memory, and the processor executes the computer program stored in the memory to cause an apparatus to perform the method of any one of claims 1 to 10 or 11 to 20.

43. A terminal, comprising a processor and a memory, wherein a computer program is stored in the memory, and the processor executes the computer program stored in the memory to cause an apparatus to perform the method of any one of claims 21 to 27 or 28 to 37.

44. A system for generating a datagram transport layer security (DTLS) pre-master secret, comprising:
a first entity, configured to perform the method of any one of claims 1 to 10 or 11 to 20; and
a terminal, configured to perform the method of any one of claims 21 to 27 or 28 to 37.

45. A communication apparatus, comprising: a processor and an interface circuit, wherein
the interface circuit is configured to receive code instructions and transmit the code instructions to the processor;
the processor is configured to execute the code instructions to perform the method of any one of claims 1 to 10, 11 to 20, 21 to 27, or 28 to 37.

46. A computer-readable storage medium for storing instructions, wherein when the instructions are executed, the method of any one of claims 1 to 10, 11 to 20, 21 to 27, or 28 to 37 is implemented.
